# EUROPEAN PATENT APPLICATION

(11) **EP 4 600 861 A1**
(43) Date of publication of application: **13.08.2025**
(21) Application number: 25155251.9
(22) Date of filing: 31.01.2025
(51) Int. Cl.: G06F 30/392, G06F 30/394, G06F 30/398, G06F 30/12, G06F 113/18

(54) **METHOD AND SYSTEM OF VIA PLACEMENT OF A DYNAMIC POWER DISTRIBUTION NETWORK IN A CHIP PACKAGE**

(30) Priority: 12.02.2024 US 202418439054
(71) Applicant: Google LLC, Mountain View, CA 94043 (US)
(72) Inventor: TRAN, Nguyen, Mountain View, California, 94043 (US)
(74) Representative: Betten & Resch

(57) **Abstract**

Aspects of the disclosed technology include a method and a system for an automated process of via placement for a dynamic power distribution network in a chip package. A method for via placement in a chip package includes receiving, by one or more processors, user input defining a working area of the chip package and identifying bump X-Y coordinates and X-Y bump pitches within the defined working area. The one or more processors also identify via location parameters, which are defined by via pad stack design, the bump X-Y coordinates, and the X-Y bump pitches. Then the one or more processors determine via locations for each of a plurality of vias at one or more layers in the chip package based on the identified via location parameters and provide instructions for placing the plurality of vias at the determined via locations in the chip package.

## Description

### BACKGROUND

A power distribution network is an important design factor in high-speed digital systems. Via density in a power distribution network directly impacts the power integrity of the system. High-speed and high-power applications require a greater number of vias or a higher via density throughout each chip package in the system. Typically, each chip package requires hundreds of thousands of vias and via routing is manually performed using computer aided design ("CAD") software. Manual via routing of the power distribution network is costly, time consuming, and subject to human error.

### BRIEF SUMMARY

Aspects of the disclosed technology include a method and a system for an automated process for dynamic power distribution network via placement in a chip package. The dynamic via placement may be used for chip package design, such as for a hardware accelerator, such as a tensor processing unit, or other type of processor implemented on a package. The via placement engine executes a dynamic via placement algorithm that locates the optimal placement for vias throughout a chip package to maximize or improve via density. The via placement engine collects user input to generate instructions for via placement in a chip package.

One aspect of the technology is directed to a method for dynamic via placement in a chip package. The method comprises receiving, by one or more processors, user input defining a working area of the chip package; identifying, by the one or more processors, bump X-Y coordinates and X-Y bump pitches within the defined working area; identifying, by the one or more processors, via location parameters, the via location parameters defined by a via pad stack design, the bump X-Y coordinates, and the X-Y bump pitches; dynamically determining, by the one or more processors, via locations for each of a plurality of vias at one or more layers in the chip package based on the identified via location parameters; and providing instructions for placing, by the one or more processors, the plurality of vias at the determined via locations in the chip package.

The method may further comprise converting, by the one or more processors, the bump X-Y coordinates into column and row indices.

The user input comprises primary user input further comprising a bump map, a ball grid array, a first net name, and a pad stack design.

The method may further comprise determining the via locations by receiving, by the one or more processors, secondary user input comprising a shift X-Y location, a skip X-Y location, a start location, and a second net name and determining the via locations in accordance with the secondary user input. The one or more processors comprise a user interface, the user interface collecting the primary and secondary user input.

The method may further comprise each of the plurality of vias having an associated net name. Placing each of the plurality of vias, by one or more processors, may further comprise a first via with a first net name at a first bump location and placing a second via with a second net name that is different from the first net name at a second bump location that is offset from a first bump location, in the chip package.

The method may further comprise uniformly skipping N columns or M rows in the chip package when placing the second via, wherein N and M are integers greater than 0, and N and M are consistent for each via placement.

The method may further comprise non-uniformly skipping N columns or M rows in the chip package when placing the second via, wherein N and M are integers greater than or equal to 0, and values for N and M are not consistent for each via placement.

The via location parameters comprise offset and skipping locations, a pad stack design, and a net name for each via.

The method may further comprise defining a working area by receiving, by one or more processors, user input comprising a predefined shape drawn by a user and selecting, by one or more processors, the predefined shape as a working area.

Another aspect of the technology is direct to a system for a dynamic via placement in a chip package comprising one or more processors. The one or more processors are configured to receive user input defining a working area of the chip package; identify bump X-Y coordinates and X-Y bump pitches within the defined working area; identify via location parameters, the via location parameters defined by a via pad stack design, the bump X-Y coordinates, and the X-Y bump pitches; dynamically determine via locations for each of a plurality of vias at one or more layers in the chip package based on the identified via location parameters; and provide instructions for placing the plurality of vias at the determined via locations in the chip package.

Yet another aspect of the technology is directed to one or more processors configured to convert bump X-Y coordinates into column and row indices. The user input comprises primary input further comprising a bump map, a ball grid array, a first net name, and a pad stack design.

Yet another aspect of the technology is directed to one or more processors configured to receive secondary user input comprising a shift X-Y location, a skip X-Y location, a start location, and a second net name and determine the via locations in accordance with the secondary user input.

Each of the plurality of vias has an associated net name, and in placing the vias, the one or more processors are configured to place a first via with a first net name at a first bump location and place a second via with a second net name that is different from the first net name at a second bump location that is offset from a first bump location, in the chip package.

Yet another aspect of the technology is directed to one or more processors configured to uniformly skip N columns or M rows in the chip package when placing the second via, wherein N and M are integers greater than 0, and N and M are consistent for each via placement.

Yet another aspect of the technology is directed to one or more processors configured to non-uniformly skip N columns or M rows in the chip package when placing the second via, wherein N and M are integers greater than or equal to 0, and values for N and M are not consistent for each via placement.

The via location parameters include offset and skipping locations, a pad stack design, and a net name for each via. The one or more processors includes a user interface, the user interface configured to collect the primary and secondary user input.

Another aspect of the technology is directed to one or more non-transitory computer-readable storage media, storing instructions that are operable, when executed by one or more processors, to cause the one or more processors to perform operations. The operations comprising receiving user input defining a working area of a chip package; identifying bump X-Y coordinates and X-Y bump pitches within the defined working area; identifying via location parameters, the via location parameters defined by a via pad stack design, the bump X-Y coordinates, and the X-Y bump pitches; dynamically determining via locations for each of a plurality of vias at one or more layers in the chip package based on the identified via location parameters; and providing instructions for placing the plurality of vias at the determined via locations in the chip package.

### BRIEF DESCRIPTION OF THE DRAWINGS

Fig. 1 is a flow diagram illustrating automated via placement in a chip package according to aspects of the disclosure.
Fig. 2 is an example bump map according to aspects of the disclosure.
Fig. 3 is a flow diagram of an example method for automated via placement in the chip package according to aspects of the disclosure.
Fig. 4 is an example bump map illustrating via placement according to aspects of the disclosure.
Figs. 5A-5B illustrate via placement according to aspects of the disclosure.
Fig. 6 illustrates a user interface for implementing a via placement engine according to aspects of the disclosure.
Fig. 7 is a block diagram of an example system for automated via placement in the chip package according to aspects of the disclosure.

### DETAILED DESCRIPTION

### Overview

The disclosed technology is directed towards an automated process for dynamic power distribution network via placement in a chip package. A power distribution network is a network of power and ground connections that supply power to the components in a high-speed or high-power digital system ("system"). A via placement engine executes a dynamic via placement algorithm that locates optimal placement for vias throughout the chip package to improve via density. Improved via density may reduce or minimize impedance of the power distribution network by providing for more available vias to carry current through the chip package, which improves power integrity and performance of the system.

The via placement engine can generate placement instructions indicating the placement of the vias of the power distribution network. In some examples, the instructions can be received and processed by a chip fabrication system, which may be part of a manufacturing facility for building a chip package in accordance with the instructions. In some examples, the via placement engine is also configured to fabricate a chip package in accordance with the generated via placement instructions. For example, the via placement engine may be implemented as part of a chip fabrication system of a manufacturing facility.

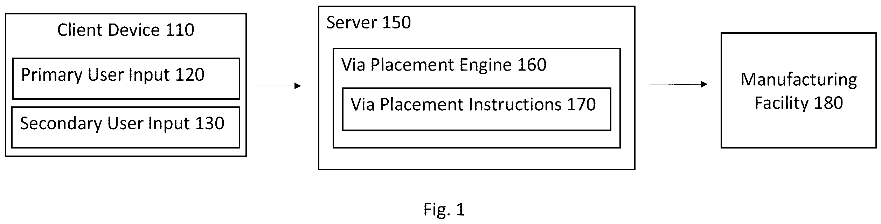

Fig. 1 illustrates an example method for generating via placement instructions. For example, a via placement engine 160 may be housed within a server 150. The via placement engine 160 may be configured to generate via placement instructions 170. In some examples, the via placement instructions 170 may be generated based on primary user input 120 and/or secondary user input 130 received from a client device 110. The via placement instructions 170 generated by via placement engine 160 may be transmitted to and/or processed by a manufacturing facility 180 to manufacture a chip package.

The placement instructions 170 correspond to one or more placement locations for one or more vias during chip package manufacturing. For example, the via placement instructions 170 may indicate one or more predetermined locations for the vias throughout layers of the chip package and can extend vertically from one layer to another. As a result of a fabrication system fabricating a chip package in accordance with the via placement instructions 170 from the via placement engine 160, the vias route automatically to complete a functioning power distribution network for an industrial quality package. The via placement engine 160 can generate via placement instructions 170 to place vias throughout the chip package at varying layers to connect a ball grid array, which is on a lower layer of the chip package layered on top of a substrate, to a bump side of the chip package, which is on a top layer of the chip package. Each chip package can be represented by a bump map, provided as primary user input 120, which identifies the location of each bump on the top layer of the chip. The bumps can be placed by row and column. Each bump has unique row and column indices, the rows being in the X direction and the columns in the Y direction.

In some examples in which the via placement engine 160 is implemented as part of a software, e.g., design software such as a CAD software, each via can be placed in a specific net and each net can have its own specific net name. Net names can be provided as primary user input 120 and/or secondary user input 130 to the via placement engine 160. The via placement engine 160 can generate via placement instructions 170 to place vias in specific nets to connect each net throughout the chip package. The nets categorize which pins will connect to each other during the routing. The net names can be utilized to organize data and can be listed in a netlist to facilitate the routing process. Vias grouped in the same net share via design rules. Further, each bump in the chip package is also associated with a particular net name. For example, a ground net ("VSS") and a power net ("VDD") can be net names and the chip package may have VSS/VDD bumps and VSS/VDD vias. Power (i.e, VDD) or ground (i.e, VSS) vias can be placed in the chip package that connect directly from the bump side top layer of the chip package to the ball grid array on the bottom layer of the chip package. The power or ground pins are the main connection between the chip package and the PCB. VSS and VDD vias build a power distribution network for the chip package.

The via placement engine 160 may generate via placement instructions 170 that stack, offset, or tangle the vias depending on the individual chip package design and each included pad stack. A pad stack refers to conductive layers used to form a surface mount or through-hole connections. The pad stack may have associated design rules related to a via pad size, a via thickness, a drill size, etc. for each layer of the chip package. A via structure is designed according to the design rules in the pad stack, and each via in the chip package belongs to a pad stack.

As an initial step, the via placement engine 160 receives primary user input 120 including the bump map, the ball grid array, the selected working area, the net name, and the pad stack design including the pad stack design rules, and the power or ground rails that will be routed through the chip package. The selected work area defines a specific area or region of the package for which the via placement engine 160 will automatically determine via placement. The via placement engine works on the specific area within the chip package defined by the user input and will not affect the layout of other regions within the chip package not selected by the user input. The via placement engine 160 may work in conjunction with software, such as a design software, which provides an interface for receiving the user input and displaying the automatically generated via design.

The via placement engine 160 can generate via placement instructions 170 to place vias at any location in any layer throughout the chip package using the via pad stacks which are pre-defined on different layers of the chip package. Additionally, the via placement engine 160 can generate via placement instructions 170 to place vias with different net names under bumps that are offset from original bump locations. Further, the via placement engine 160 can skip a row or a column and place vias with different net names under bumps that are offset from original bump locations by uniformly skipping by N columns or M rows, where N and M are consistent for each via placement. Lastly, the via placement engine 160 can position vias in patterns that skip columns and rows non-uniformly. The via placement engine 160 can place vias with different net names under bumps that are offset from original bump locations non-uniformly by skipping N columns and M rows, where N is not equal to M and N and M are not consistent for each via placement.

The via placement engine 160 may be integrated with software, e.g., design software, to perform the automatic power distribution network routing. The output of the via placement engine 160 can be referred to as a via database list which includes via location parameters to place vias in a chip package design. The via placement engine 160 may use a placement function to read all items in the via database list and provide via placement instructions 170 to place the vias in the correct location in the design. The via placement engine 160 can include an interface implemented inside the software which allows for communication between the dynamic via placement algorithm and the software.

The via placement engine 160 can reduce or eliminate human intervention and the risk of human error during via placement. Further, the automated power distribution network routing process saves a significant amount of time, as it can be completed in a matter of minutes, while the manual placement of a similar number of vias would take weeks. The via placement engine 160 can be used for designing and fabricating hardware accelerator chips, such as tensor processing units (TPUs), application-specific integrated circuits (ASICs), graphics processing units (GPUs), field-programmable gate arrays (FPGAs), microcontrollers, systems-on-a-chip (SoCs), graphene-based chips, and central processing unit chip package design, as well as other chips.

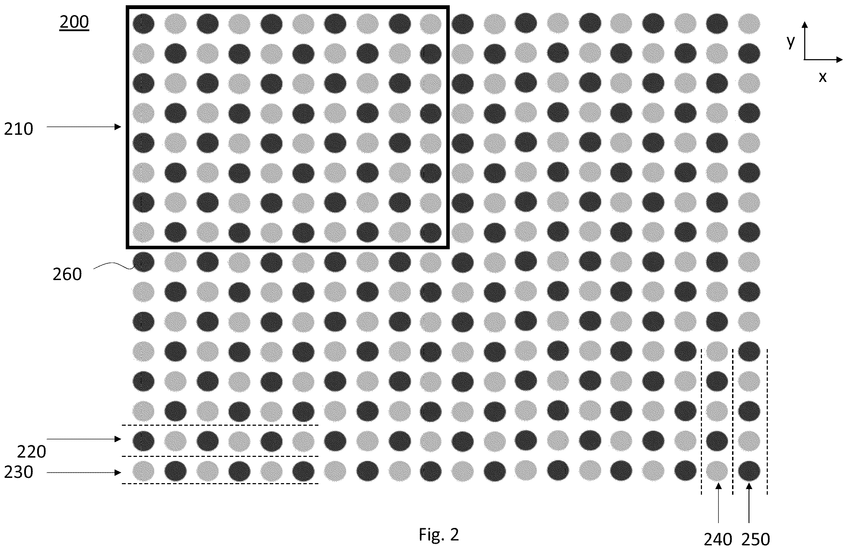

Fig. 2 is a processing unit bump map 200 illustrating bump locations on the top layer of the chip package. The bumps 260 can be spaced depending on a X-Y bump pitch which defines a space between each bump. X moves along the horizontal axis of the bump map 200 in correlation with the rows and Y moves along the vertical axis of the bump map in correlation with the columns. The bumps 260 can be grouped by row and column and further by even rows 220, odd rows 230, even columns 240, and odd columns 250. The selected working area 210 indicates the region selected, for example based on user input, to implement the via placement engine.

### Example Methods

It should be understood that the operations involved in the following method need not be performed in the precise order described. Rather, various operations may be executed, for example by one or more processors, in a different order or simultaneously, and operations may be added or omitted.

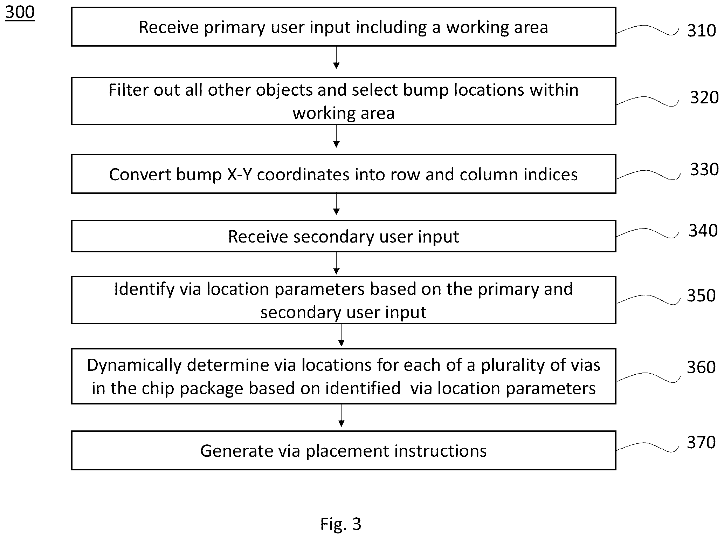

A method of automated via placement in a chip package 300 is illustrated in a flow diagram provided in Fig. 3. In block 310, the via placement engine receives primary user input. The primary user input may include, for example, the bump map having bump X-Y coordinates and bump X-Y pitches, the ball grid array, the selected working area, a first net name, and the pad stack design including the pad stack design rules, and the power or ground rails that will be routed through the chip package. The primary user input may be entered using a user interface. The user interface may connect to the software to implement the via placement engine. The via placement engine may be integrated with software, e.g., design software such as CAD software, to perform the automatic power distribution network routing. As an example, the user interface may receive a primary user input defining the area of the chip package to be processed for via design. For example, the user interface may receive one or more user inputs corresponding to a shape drawn in the software. The shape may be a predefined shape, such as a polygon, a freeform shape, or the like. The primary user input may inform the via placement engine of the area's location. A selection function selects this shape and defines the polygon information as the selected working area.

In block 320, the via placement engine filters out all other objects within the chip package and selects bump locations within the working area identifying bump X-Y coordinates and bump X-Y pitches within the selected working area.

In block 330, the via placement engine converts the identified bump X-Y coordinates into row and column indices in order to normalize the bump X-Y coordinates to facilitate user interaction with the via placement engine. The bump X-Y coordinates are converted into row and column indices using the bump X-Y pitch.

In block 340, once the bump X-Y coordinates are normalized into row and column indices, the via placement engine may receive secondary input from the user. The secondary input may include shift X-Y locations, skip X-Y location, a start location for via placement, and/or a second net name to place a via under. The shift X-Y determines the offset placement of a via measured in µm in either the X or Y direction. For example, the via placement engine may offset via placement in the X direction by 20 µm and in the Y direction by 25 µm from the bump the via is placed under. The skip X-Y determines the number of rows or columns that will be skipped between each via placement. For example, the via placement engine may place a via every 3 columns and every 1 row or a skip X of 1 and skip Y of 3. Further, these placement abilities may be used alone or in combination with each other. The start location for the via placement is the starting location where the via placement begins.

The second net name to place a via under may refer to a VSS via placed under a VDD bump. In such an example, VSS and VDD are two different net names. The via may originally be associated with a particular net name, such as VSS. However, the via placement engine may place the VSS via under another net name, *e.g.,* a different net name. According to some examples, the system may receive a user input corresponding to the different net name, for example VDD. The received user input may further include an indication of a specific even or odd row or column in a specific layer in the chip package for the net name. The via placement engine will then, based on the received user input, place the VSS via under a VDD location or bump allocated to the specific layer and row or column.

In block 350, after the primary and the secondary user input is collected, the via placement engine identifies via location parameters based on the primary and secondary user input. The via location parameters include the shift X-Y, the skip X-Y location, all pad stacks, and the same or different net name of each via.

In block 360, the via placement engine dynamically determines via placement instructions. The via placement instructions include locations for each of a plurality of vias in the chip package based on the identified via location parameters at an accelerated rate without risk of human error while optimizing via density in the process. The via placement engine has multiple placement opportunities to improve and optimize via density. For example, the via placement engine can generate via placement instructions to place vias at any location on any layers throughout the chip package. Additionally, the via placement engine can generate via placement instructions to place vias with different net names under bumps that are offset from original bump locations. Further, the via placement engine can generate via placement instructions to skip a row or a column and place vias with different net names under bumps that are offset from original bump locations by uniformly skipping by N columns or M rows, where N and M are consistent for each via placement. Lastly, the via placement engine can position vias in patterns that skip columns and rows non-uniformly. The via placement engine can generate via placement instructions to place vias with different net names under bumps that are offset from original bump locations non-uniformly by skipping N columns and M rows, where N is not equal to M and N and M are not consistent for each via placement.

The via placement engine can consider the power consumption of the system, the location of the power or ground pins, location of the vias on the substrate, material properties of the substrate, and the electrical characteristics of the vias during placement. The output of the dynamic via placement algorithm can include via placement instructions. The via placement instructions include location parameters to place vias in the design. The via location parameters can include the offset and skipping locations, the pad stacks, and the same or different net names. The via placement engine may be configured to execute a placement function to read all items in the via database list and provide instructions to place the vias in the correct location in the design.

In block 370, the via placement engine generates via placement instructions to be utilized during manufacture of a chip package.

As noted above, the step of dynamically determining via locations for each of a plurality of vias in the chip package further can include placing a via at any location within any layer in the chip package. Each of the plurality of vias has an associated net name, such as VDD or VSS. The via placement engine may generate via placement instructions to place a first via with a first net name at a first bump location and may also place a second via with a second net name at the first bump location. The via placement engine may place the via slightly offset from the first location or a number of layers away from the first location instead of directly underneath the first location.

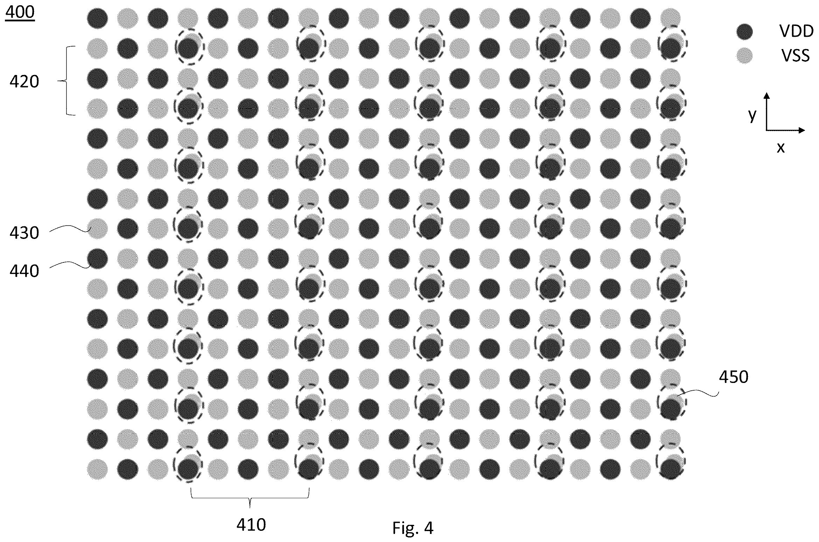

Fig. 4 illustrates a bump map 400 of the chip package including VDD bumps 440 and VSS bumps 430. In Fig. 4, a VSS via 450 is placed under a VDD net name under the VDD bumps 440. The VSS via 450 is offset by a shift X of 20 µm and a shift Y of 30 µm. The via placement engine skips via placement by 3 columns 410 and 1 row 420.

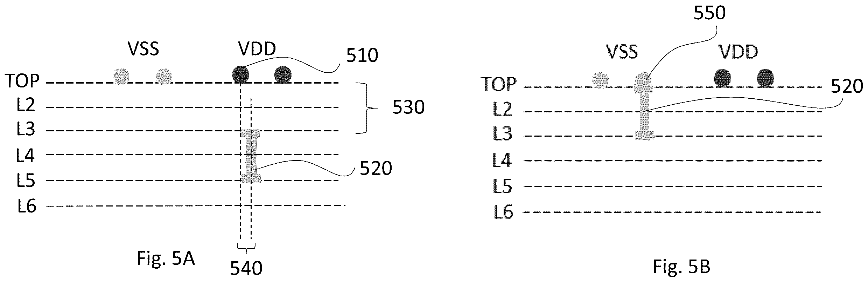

Fig. 5A illustrates another via placement option with a VSS via 520 placed under a VDD bump 510 at the third layer of the chip package leaving a space 530 between the VDD bump and the placed VSS via and is offset 540 from the original bump location.

Fig. 5B illustrates yet another via placement option with the VSS via 520 placed at a VSS bump 550 at the layer directly beneath the VSS bump.

### Example Systems

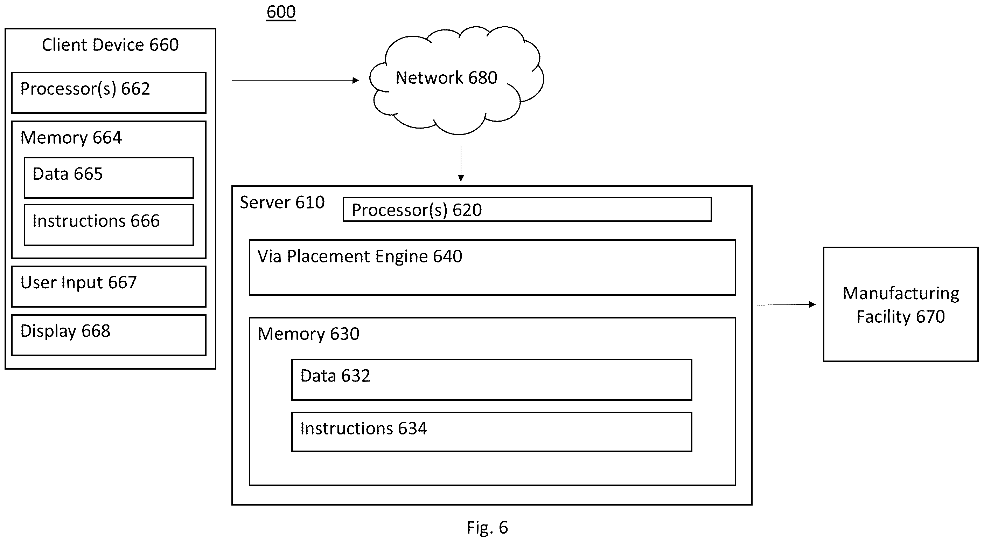

Further to the example method described above, an example system is now described. Such system may include the method described above, modifications thereof, or any variety of methods. Fig. 6 illustrates an example system 600 in which the features described above may be implemented. Fig 6 illustrates a block diagram for a system of automatic dynamic placement of vias in a chip package. In this example, system 600 may include a server 610, a client device 660, a network 680, and a manufacturing facility 670.

The server 610 may include one or more processors 620. Within the server 610 is a via placement engine 640 and a memory 630. The via placement engine 640 can be implemented within the server 610. In some examples, the via placement engine 640 is implemented using software, such as a design software. The design software may be, for example, a CAD software. The memory which includes data 632 and instructions 634. The via placement engine 640 utilizes data 632 in memory 630 to dynamically determine via placement throughout a chip package and generate instructions 634 for the manufacturing facility 670. The via placement engine 640 provides instructions 634 that determine where vias will be placed throughout the chip package during manufacturing. Data 632 also includes via location parameters determined by instructions 634. The via location parameters include a shift X-Y, a skip X-Y location, all pad stacks, and a same or different net name for each via.

Memory 630 of the server 610 can store information accessible by the one or more processors 620, including instructions 634 that can be executed by the one or more processors 620. Memory 630 can also include data 632 that can be retrieved, manipulated, or stored by the processor. The memory 630 can be of any non-transitory type capable of storing information accessible by the processor, such as a hard-drive, memory card, read-only memory ("ROM"), random access memory ("RAM"), optical disks, as well as other write-capable and read-only memories. Memory 664 may store information that is accessible by the processors 620, including instructions 634 that may be executed by processors 620, and data 632.

The instructions 634 can be any set of instructions to be executed directly, such as machine code, or indirectly, such as scripts, by the one or more processors. In that regard, the terms "instructions," "application," "steps," and "programs" can be used interchangeably herein. The instructions can be stored in object code format for direct processing by a processor, or in any other computing device language including scripts or collections of independent source code modules that are interpreted on demand or compiled in advance.

Data 632 may be retrieved, stored, or modified by the one or more processors 620 in accordance with the instructions 634. For instance, although the subject matter described herein is not limited by any particular data structure, the data can be stored in computer registers, in a relational database as a table having many different fields and records, or XML documents. The data can also be formatted in any computing device-readable format such as, but not limited to, binary values, ASCII, or Unicode. Moreover, the data can include any information sufficient to identify the relevant information, such as numbers, descriptive text, proprietary codes, pointers, references to data stored in other memories such as at other network locations, or information that is used by a function to calculate the relevant data.

The one or more processors 620 may include any conventional processor, such as a CPU or microprocessor. Alternatively, the processor can be a dedicated component such as an ASIC or other hardware-based processor. Although not necessary, the server 610 may include computing devices that include specialized hardware components to perform specific computing functions faster or more efficiently.

The term "engine" refers to a software-based system, subsystem, or process that is programmed to perform one or more specific functions. The engine can be implemented as one or more software modules or components, or can be installed on one or more computers in one or more locations. A particular engine can have one or more computers dedicated thereto, or multiple engines can be installed and running on the same computer or computers.

Although Fig. 6 functionally illustrates the processor, memory, and other elements of the server 610 as being within the same respective blocks, it will be understood by those of ordinary skill in the art that the processor or memory may actually include multiple processors or memories that may or may not be stored within the same physical housing. Similarly, the memory may be a hard drive or other storage media located in a housing different from that of the server 610. Accordingly, references to a processor or server will be understood to include references to a collection of processors or servers or memories that may or may not operate in parallel.

System 600 further includes the client device 660 utilized to provide data 665 and instructions 666 to the server 610 through the network 680. The client device 660 may include a processor 662, memory 664, user input 667, and a display 668. The display 668 may include a user interface, but is not limited to such an interface. The memory 664 may include data 665 and instructions 666 sent to the via placement engine 640 in the server 610. The user input 667 includes the primary and secondary user input.

Processor 662, memory 664, data 665, and instructions 666 of the client device 660 are defined as structurally and functionally similar to above disclosed processors 620, memory 630, data 632, and instructions 634 of the server 610. The user input 667 creates data 665 that is passed to the via placement engine 640 in the server 610 through the network 680.

As shown in Fig. 6, the client device 660 may be a personal computing device intended for use by a respective user, and have all of the components normally used in connection with a personal computing device including one or more processors (e.g., a central processing unit (CPU)), memory (e.g., RAM and internal hard drives) storing data and instructions, an output, such as a display (e.g., a monitor having a screen, a touch-screen, a projector, a television, or other device such as a smart watch display that is operable to display information), and user input devices (e.g., a mouse, keyboard, touchscreen or microphone). The device may also include a camera for recording video streams, speakers, a network interface device, and all of the components used for connecting these elements to one another. The client device 660 may be capable of wirelessly exchanging or obtaining data over the network 680.

Although the client device 660 may include a full-sized personal computing device, it may alternatively include mobile computing devices capable of wirelessly exchanging data with a server over a network such as the Internet. By way of example only, client device 660 may be a mobile phone or a device such as a wireless-enabled PDA, a tablet PC, a netbook, a smart watch, a head-mounted computing system, or any other device that is capable of obtaining information via the Internet. As an example, the user may input information using a small keyboard, a keypad, microphone, using visual signals with a camera, or a touch screen.

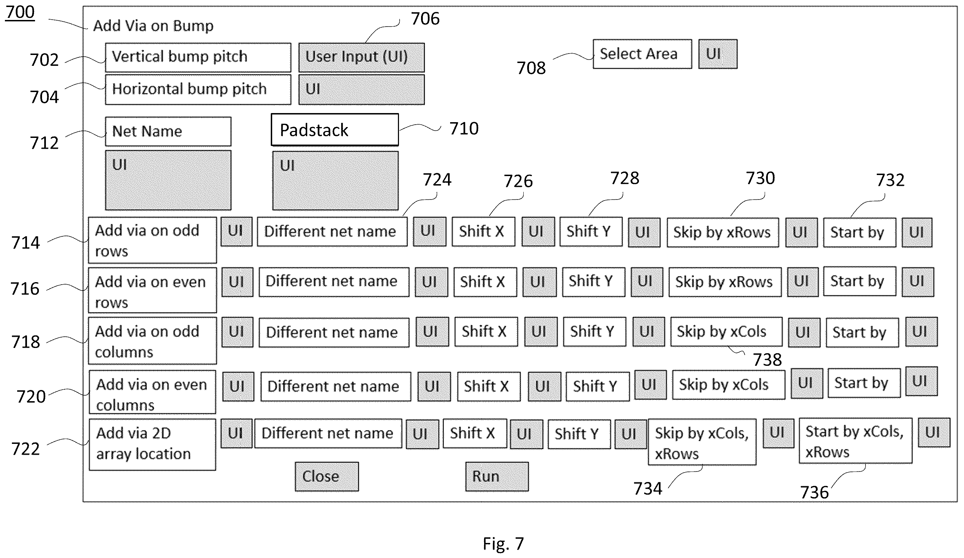

Fig. 7 illustrates an example user interface 700 provided for output on the display 668 of the client device 660. The user interface 700 for implementation of the via placement engine. The user interface allows users to input primary and secondary user input 706, for example using text input fields, drop-down menus, buttons, and other interactable elements. The user interface 700 may be at least partially implemented on either a user computing device or a server. For example, the user interface can be a web application running on a browser, or a standalone software application running on a user computing device and configured to communicate data to a server. In some examples, input and output to and from the system can be performed using a program implementing a corresponding application programming interface (API) exposing the system to user input and requests.

For example, as shown in Fig. 7, the primary user input can include a vertical bump pitch 702, a horizontal bump pitch 704, a selected working area 708, a first net name 712 for a bump location, and a pad stack design 710. The secondary user input can include a different net name 724, shift X 726, shift Y 728, skip by xRows 730, skip by xColumns 738, skip by xColumns and xRows 734, and a starting point for via placement 732,736. The via net name may be the same as or different from the bump net name. The via placement engine may offset the via in the X or Y direction as determined by the shift X 726 and the shift Y 728 features. The via placement engine can skip rows or columns uniformly and place a plurality of vias throughout the chip package. The via placement engine may add a plurality of vias throughout the chip package by grouping rows and columns in each layer of the chip package. The via placement engine has the capability to add vias in all odd rows 714, in all even rows 716, in all odd columns 718, or in all even columns 720. The 2d array location option 722 allows non-uniform row and column via placement. The via placement engine may skip a predetermined number of columns and rows.

Referring back to Fig. 6, the client device 660 and the server 610 can be at various nodes of a network 680 and capable of directly and indirectly communicating with other nodes of network 680. Although one client device 660 and one server 610 is depicted in Fig. 6, it should be appreciated that a system can include one or more devices or servers, with each device or server being at a different node of network 680. The network 680 and intervening nodes described herein can be interconnected using various protocols and systems, such that the network can be part of the Internet, World Wide Web, specific intranets, wide area networks, or local networks. The network 680 can utilize standard communications protocols, such as WiFi, Bluetooth, 4G, 5G, etc. Although certain advantages are obtained when information is transmitted or received as noted above, other aspects of the subject matter described herein are not limited to any particular manner of transmission.

In one example, system 600 may include one or more servers 610 having one or more computing devices, e.g., a load balanced server farm, that exchange information with different devices of a network for the purpose of receiving, processing, and transmitting the data to and from other computing devices. For instance, one or more server 610 may be a web server that is capable of communicating with the one or more client computing devices 660 via the network 680. In addition, server 610 may use network 680 to transmit and present information from the client device 660 back to the client device 660 to be used in the manufacturing facility 670 manufacturing the chip package. The processes and logic flows described herein can be performed by one or more computers executing one or more computer programs to perform functions by operating on input data and generating output data. The processes and logic flows mcan also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The term "configured" is used herein in connection with systems and computer program components. For a system of one or more computers to be configured to perform particular operations or actions means that the system has installed on it software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the implementations should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A method for dynamic via placement in a chip package, comprising:
receiving, by one or more processors, user input defining a working area of the chip package;
identifying, by the one or more processors, bump X-Y coordinates and X-Y bump pitches within the defined working area;
identifying, by the one or more processors, via location parameters, the via location parameters defined by a via pad stack design, the bump X-Y coordinates, and the X-Y bump pitches;
dynamically determining, by the one or more processors, via locations for each of a plurality of vias at one or more layers in the chip package based on the identified via location parameters; and
providing instructions for placing, by the one or more processors, the plurality of vias at the determined via locations in the chip package.

2. The method of claim 1, further comprising converting, by the one or more processors, the bump X-Y coordinates into column and row indices.

3. The method of claim 1 or 2, wherein the user input comprises primary user input further comprising a bump map, a ball grid array, a first net name, and a pad stack design.

4. The method of claim 3, wherein determining the via locations comprises:
receiving, by the one or more processors, secondary user input comprising a shift X-Y location, a skip X-Y location, a start location, and a second net name; and
determining the via locations in accordance with the secondary user input, and wherein optionally the one or more processors comprise a user interface, the user interface collecting the primary and secondary user input.

5. The method of any one of the preceding claims, wherein each of the plurality of vias has an associated net name, and further comprising placing, by one or more processors, a first via with a first net name at a first bump location and placing a second via with a second net name that is different from the first net name at a second bump location that is offset from the first bump location, in the chip package.

6. The method of claim 5, further comprising uniformly skipping N columns or M rows in the chip package when placing the second via, wherein N and M are integers greater than 0, and N and M are consistent for each via placement, or further comprising non-uniformly skipping N columns or M rows in the chip package when placing the second via, wherein N and M are integers greater than or equal to 0, and values for N and M are not consistent for each via placement.

7. The method of any one of the preceding claims, wherein the via location parameters comprise offset and skipping locations, a pad stack design, and a net name for each via, and/or wherein defining the working area further comprises receiving, by one or more processors, user input comprising a predefined shape drawn by a user and selecting, by one or more processors, the predefined shape as the working area.

8. A system for a dynamic via placement in a chip package, comprising: one or more processors configured to:
receive user input defining a working area of the chip package;
identify bump X-Y coordinates and X-Y bump pitches within the defined working area;
identify via location parameters, the via location parameters defined by a via pad stack design, the bump X-Y coordinates, and the X-Y bump pitches;
dynamically determine via locations for each of a plurality of vias at one or more layers in the chip package based on the identified via location parameters; and
provide instructions for placing the plurality of vias at the determined via locations in the chip package.

9. The system of claim 8, wherein the one or more processors are further configured to convert bump X-Y coordinates into column and row indices.

10. The system of claim 8 or 9, wherein the user input comprises primary input further comprising a bump map, a ball grid array, a first net name, and a pad stack design, and wherein optionally the one or more processors are further configured to receive secondary user input comprising a shift X-Y location, a skip X-Y location, a start location, and a second net name and determine the via locations in accordance with the secondary user input.

11. The system of any one of claims 8 to 10, wherein each of the plurality of vias has an associated net name, and in placing the vias, the one or more processors are configured to place a first via with a first net name at a first bump location and place a second via with a second net name that is different from the first net name at a second bump location that is offset from the first bump location, in the chip package.

12. The system of claim 11, wherein in placing the vias, the one or more processors are configured to uniformly skip N columns or M rows in the chip package when placing the second via, wherein N and M are integers greater than 0, and N and M are consistent for each via placement.

13. The system of claim 11, wherein in placing the vias, the one or more processors are configured to non-uniformly skip N columns or M rows in the chip package when placing the second via, wherein N and M are integers greater than or equal to 0, and values for N and M are not consistent for each via placement.

14. The system of any one of claims 8 to 13, wherein the via location parameters include offset and skipping locations, a pad stack design, and a net name for each via, and/or wherein the one or more processors includes a user interface, the user interface configured to collect the primary and secondary user input.

15. One or more non-transitory computer-readable storage media, storing instructions that are operable, when executed by one or more processors, to cause the one or more processors to perform operations comprising:
receiving user input defining a working area of a chip package;
identifying bump X-Y coordinates and X-Y bump pitches within the defined working area;
identifying via location parameters, the via location parameters defined by a via pad stack design, the bump X-Y coordinates, and the X-Y bump pitches;
dynamically determining via locations for each of a plurality of vias at one or more layers in the chip package based on the identified via location parameters; and
providing instructions for placing the plurality of vias at the determined via locations in the chip package.
